# EUROPEAN PATENT SPECIFICATION

(11) **EP 2 366 089 B1**
(45) Date of publication and mention of the grant of the patent: **19.06.2013**
(21) Application number: 09833732.2
(22) Date of filing: 14.12.2009
(51) Int. Cl.: G01B 5/00, B21D 1/12, B21D 1/14, G01B 11/245, G01B 7/287

(54) **METHOD AND ARRANGEMENT FOR ALIGNING A VEHICLE**
VERFAHREN UND ANORDNUNG ZUR FAHRZEUGAUSRICHTUNG
PROCÉDÉ ET DISPOSITIF POUR ALIGNER UN VÉHICULE

(30) Priority: 15.12.2008 SE 0850138
(43) Date of publication of application: 21.09.2011
(73) Proprietor: CAR-O-LINER AB, 736 21 Kungsör (SE)
(72) Inventor: BÄCKMAN, Jonas, S-182 37 Danderyd (SE)
(74) Representative: Petersson, Hans Göran
(86) International application number: PCT/SE2009/051417
(87) International publication number: WO 2010/071568

(56) References cited:
- DE-A1- 4 034 770
- US-A- 6 115 927
- US-B1- 7 100 289
- US-B1- 7 324 916
- US-B2- 7 181 852

## Description

### Technical Field

The invention relates to aligning deformed vehicles, such as cars and trucks and similar motor driven land vehicles.

### Background Art

Methods have been provided for measuring vehicles, which can determine if a vehicle is deformed and the magnitude of the deformation. For example, Car-O-Liner in Sweden provides a system called Car-O-Tronic where cars are measured and the measured data are compared with data for the specific car model. The car model data are retrieved from a data base comprising original geometric data for measuring points on thousands of different car models. If the measured data does not comply with the retrieved data, the car is deformed. If the deformation is large the car needs to be aligned.

Methods for aligning vehicles have been provided where portions of the vehicle are supported and a force; large enough to deform the vehicle, is applied to another portion of the vehicle. The supports should be steady enough so that the supported portions do not move during the deforming step.

A problem is that there is a risk that the supports and the supported portions of the vehicle moves when the force is applied, so that the vehicle is not deformed enough.

A subsequent re-measuring of the vehicle will then reveal a remaining deformation, and the vehicle has to be aligned once again.

A method according to the preamble of claim 1 and an arrangement according to the preamble of claim 8 is known from US-A-6,115,927.

### Disclosure of Invention

The invention provides a method and an arrangement for aligning a vehicle without the drawbacks of the prior art. It provides a method where movements of the supported portions are monitored. The aligning method includes the steps of supporting a first portion of the vehicle, and deforming the vehicle by applying a force to a second portion of the vehicle. The method is characterised by positioning at least one motion sensing measuring unit, comprising at least one accelerometer, on the supported first portion of the vehicle before the deforming step, and tracking any movements of the supported first portion of the vehicle during the deformation by means of the measuring unit. The measuring unit is positioned on a supported portion that is not expected to move, but expected to remain still during deformation.

By tracking movements of a supported portion during the deformation an inadequate deformation can be revealed, and by using an inertial measuring unit the amount of inadequacy can be determined.

Preferably, an inertial measuring unit comprising accelerometers and gyroscopes is used as the motion sensing measuring unit.

In one embodiment, the method includes using an additional motion sensing measuring unit, e.g. an inertial measuring unit, and positioning the second inertial measuring unit on a portion that is expected to move during the deformation, so that the deformation can be monitored.

In a preferred embodiment, the method includes the step of displaying movements of the vehicle during the deformation. In this way the deforming process can be monitored in real-time and it can be ensured that the chassis is deformed as expected and that no unwanted deformation or movement occurs when the force is applied. The monitoring can be provided on a display screen where parts of the chassis that is supposed to move are indicated, and also where parts of the vehicle supposed to remain stationary are indicated in a different way, to the supposedly moving parts, so as to facilitate the control of the process.

The inventive method uses a motion sensing measuring unit comprising at least one accelerometer, preferably two or three. One accelerometer can be used for tracking an unwanted movement, but the use of more than one, and also gyroscopes, provides a more accurate and reliable method. The accelerometer or accelerometers can be combined in the measuring unit with at least one gyroscope, for example, two or three, and thus three accelerometers can be combined with one two or three gyroscopes.

When a motion is detected in a portion of the vehicle that is supposed to remain stationary during the deformation the user can suitable be alerted and the amount of movement, linear distance or angle for example, can be displayed, together also with the acceleration and velocity.

The aligning arrangement comprises at least one support for supporting at least one portion of the vehicle during the deformation and means for applying a force to a second portion to deform the vehicle. The arrangement is characterised in that it comprises means for tracking movements of the first supported portion, including at least one accelerometer, preferably an inertial measuring unit.

### Brief Description of Drawings

Figure 1 illustrates an arrangement for aligning a truck; the arrangement supports two portions of the truck and applies a deforming force to one other portion of the truck.

Figure 2 illustrates a similar arrangement from above.

### Mode(s) for Carrying Out the Invention

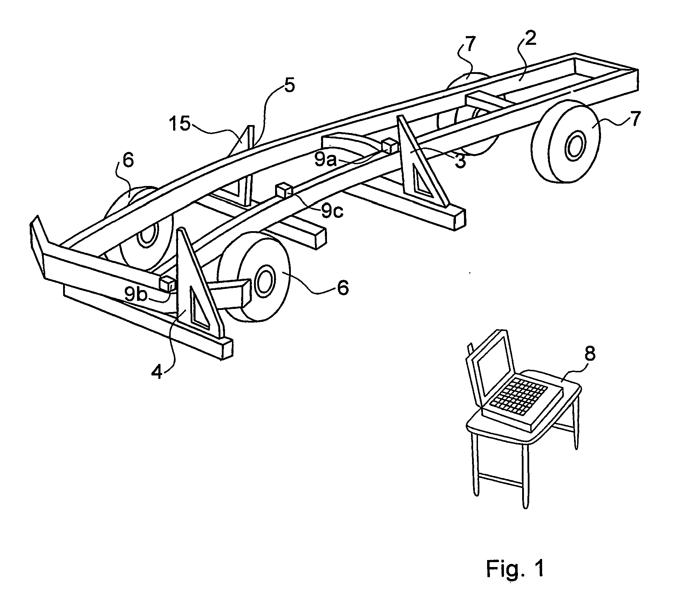

Figure 1 illustrates an arrangement for aligning a vehicle. It is a simplified illustration of a vehicle, wherein the vehicle is illustrated by its frame 2 and wheels 6, 7. The arrangement includes means 3, 4, 15 for aligning the chassis, such as the frame, of a vehicle including supports 3, 4 and force applying means 15. The arrangement also includes means for tracking movements 8, 9a-c comprising inertial measuring units (IMUs) 9a-c and a computer 8, wherein the IMUs are communicatively connected to the computer. Each IMU 9a-c comprise accelerometers and gyros for sensing its motion, and the movement tracking means 8, 9a-c preferably comprise, in a per se known manner, hardware and software for converting the motion data into movements. For example, the acceleration signals from the accelerometers in an IMU 9a-c, are converted into distance data, wherein the conversion includes integrating the accelerations twice. The distance data is transferred form each IMU 9a-c to the computer 8, which suitably includes a display, by means of which the determined distances can be displayed to a user. Alternatively, the acceleration signals are transferred to the computer 8 and the computer converts them into distance data.

During alignment of a deformed vehicle frame, the frame 2 is supported by the supports 3, 4, which are secured to the floor, and the force applying means 15, e.g. utilising hydraulics, are positioned to provide a force onto a portion of the frame that is deformed. The IMUs 9a-c are placed in different positions on the frame 2 and subsequently the force applying means 15 is activated and press the frame 2, held by the supports 3,4, with a sufficiently large force to deform it, and thus aligning it into its original straightness. During this deformation process the IMUs 9a-c track the movements, and the computer 8 displays the results. The three IMUs are positioned at different locations on the frame, a first IMU 9a is positioned close to the first support 3 and a second IMU 9b is positioned close to the second support 4. During alignment of the frame, the supports 3, 4 are supposed to remain immovable and the first and second IMU 9a, 9b are supposed not to detect any motion. The third IMU 9c is, on the other hand, positioned on an unsupported frame segment, and will register a motion during the aligning process.

In figure 1 the frame 2 is straightened by means of two supports 3, 4 and one force applying means pressing the frame sideways. As is known in the art another number of supports and force applying means can be used. Also, other types of deformations can be adjusted. For example, a vertical deformation of a vehicle, where one section has been deformed upwards, can be adjusted by holding the deformed section down, by means of a single support, and lifting upwards on both sides of the deformation, by force applying means in the form of two lifting devices, such as two hydraulic jacks.

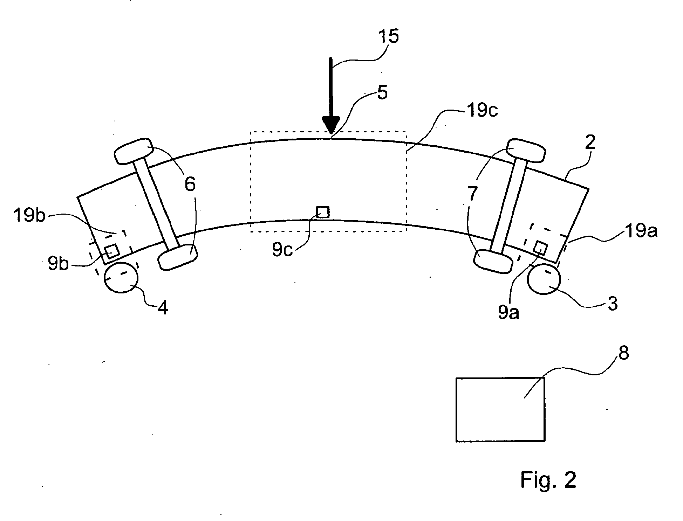

Figure 2 illustrates the same kind of deformation and alignment arrangement as in figure 1 in a view from above. The vehicle is illustrated by its deformed frame 2 (exaggerated deformation) and front and rear wheels 6 and 7. The frame 2 is supported on its left side by two supports 3, 4 close to the front and rear wheels, respectively. A force is applied in the middle right side of the frame. The movement tracking means include three IMUs communicatively connected to a computer 8.

A first IMU 9a is positioned close to one of the supports 3 in section 19a, which section should remain still during the deformation. The IMU 9a is positioned in a section that should not move or only move very little, so that if a movement occurs, which means that the deforming process is erroneous, this movement, and thus the fault, is detected by the IMU. A second IMU 9b is similarly positioned at the other support 4 in another section 19b that is not supposed to move, or move very little, during the deformation. If the second support 4 or supported section 19b moves, the movement is detected by the second IMU.

A third IMU 9c, on the other hand, is positioned within a section 19c of the vehicle frame that is distorted or deformed and needs to be aligned. Thus, the third IMU 9c is positioned in a section 19c that is supposed to move when the deforming force is applied during the deforming process in order to correct its distortion.

Each IMU 9a-c communicates with the computer 8, which displays their movements. The computer is adapted to monitor the IMUs 9a-b that are positioned in sections that should not move and if they move the computer is adapted to alert an operator by means of an alarm, visual or by sound. The computer can also be adapted to indicate on the display which section has moved, the distance it has moved and the direction. In this way the invention facilitates adjustment of the deformation process when a faulty functioning support is detected. The computer is, in a further embodiment, also adapted to present the movement of the third IMU, which is positioned in an area that should move during the deforming process, on the display for the operator. The computer can suitably be adapted to display an illustration of the chassis and update the illustration during the process, so that an operator can follow the aligning of the frame in this illustration on the display. This gives the operator an enhanced general view of the process and facilitates operation of the force applying means, so that more accurate adjustments can be taken.

## Claims

1. Method of aligning a vehicle comprising the steps of:
supporting a first portion (19A, 19B) of the vehicle,
deforming the vehicle by applying a force to a second portion (5) of the vehicle
**characterised in**
positioning at least one motion sensing measuring unit (9A, 9B) including at least one accelerometer on the supported first portion (19A, 19B) of the vehicle before the deforming step, and
tracking any movements of the supported first portion (19A, 19B) of the vehicle during the deformation by means of the motion sensing measuring unit (9A, 9B).

2. Method according to claim 1, comprising the step of
displaying movements of the vehicle during the deformation.

3. Method according to claim 1 or 2, the step of
alarming if the tracked movements are larger than a threshold.

4. Method according to any of claims 1-3, including the step of determining the distance of the tracked movement.

5. Method according to any of claims 1-4, wherein the motion sensing measuring unit is an inertial measuring unit comprising a plurality of accelerometers, such as three, and plurality of gyroscopes, such as three.

6. Method according to any of claims 1-5, wherein the step of positioning includes positioning a second motion sensing measuring unit (9C), preferably an inertial measuring unit (9C), on a portion (19C) of the vehicle, which portion is expected to move during the step of deforming.

7. Method according to any of claims 1- 6, wherein the step of tracking movements includes determining a direction of the movement.

8. Arrangement for aligning a vehicle comprising at least one support (3, 4) for supporting at least one first portion of the vehicle, means for applying a force (15) on a second portion (5) of the vehicle being adapted to deform the vehicle and **characterised in** comprising means for tracking movements (8, 9A, 9B) of the first portion (19A, 19B) of the vehicle during deformation of the vehicle, said means including at least one motion sensing measuring unit (9A, 9B) including at least one accelerometer.

9. Arrangement according to claim 8, wherein the movement tracking means (8, 9A, 9B, 9C) comprises a display and is adapted to display movements during deformation.

10. Arrangement according to claim 8 or 9, wherein the movement tracking means (8, 9A, 9B) comprises means for determining the distance of the tracked movement.

11. Arrangement according to claim 10, wherein the movement tracking means (8, 9A, 9B) is adapted to alarm if the determined distance is larger than a threshold.

12. Arrangement according to any of claims 8-11, wherein the motion sensing measuring unit is an inertial measuring unit (9A, 9B).

13. Arrangement according to any of claims 8-12, comprising means for tracking movements (8, 9C) of a third portion (19C) of the vehicle during deformation of the vehicle, which third portion is expected to move during deformation, said means including at least one motion sensing measuring unit comprising at least one accelerometer (9C).

14. Arrangement according to claim 13, wherein the motion sensing measuring unit is an inertial measuring unit (9C).

15. Arrangement according to claim 13 or 14, wherein said third portion (19C) includes said second portion (5).

## Patentansprüche

1. Verfahren zum Ausrichten eines Fahrzeugs, aufweisend die folgenden Schritte:
Unterstützen eines ersten Abschnitts (19A, 19B) des Fahrzeugs,
Deformieren des Fahrzeugs durch Aufbringen einer Kraft auf einen zweiten Abschnitt (5) des Fahrzeugs,
**gekennzeichnet durch**
Positionieren zumindest einer bewegungserfassenden Messeinheit (9A, 9B), die zumindest einen Beschleunigungsmesser auf dem unterstützten ersten Abschnitt (19A, 19B) des Fahrzeugs vor dem Deformierungsschritt aufweist, und
Nachverfolgen aller Bewegungen des unterstützten ersten Abschnitts (19A, 19B) des Fahrzeugs während der Deformierung durch die bewegungserfassende Messeinheit (9A, 9B).

2. Verfahren nach Anspruch 1, aufweisend den Schritt eines Anzeigens von Bewegungen des Fahrzeugs während der Deformation.

3. Verfahren nach Anspruch 1 oder 2 mit dem Schritt eines Alarmauslösens, wenn die nachverfolgten Bewegungen größer als ein Schwellwert sind.

4. Verfahren nach irgendeinem der Ansprüche 1 bis 3, aufweisend den Schritt eines
Bestimmens des Abstands der nachverfolgten Bewegung.

5. Verfahren nach irgendeinem der Ansprüche 1 bis 4, wobei die bewegungserfassende Messeinheit eine Trägheitsmesseinheit ist, die eine Vielzahl von Beschleunigungsmessern aufweist, z.B. drei, und eine Vielzahl von Gyroskopen, z.B. drei.

6. Verfahren nach irgendeinem der Ansprüche 1 bis 5, bei welchem der Schritt des Positionierens ein Positionieren einer zweiten bewegungserfassenden Messeinheit (9C) aufweist, vorzugsweise einer Trägheitsmesseinheit (9C) auf einem Abschnitt (19C) des Fahrzeugs, wobei erwartet wird, dass sich der Abschnitt während des Deformierungsschritts bewegt.

7. Verfahren nach irgendeinem der Ansprüche 1 bis 6, bei welchem der Schritt des Nachverfolgens der Bewegungen eine Bestimmung einer Bewegungsrichtung aufweist.

8. Anordnung zum Ausrichten eines Fahrzeugs, aufweisend zumindest eine Unterstützung (3, 4) zum Unterstützen zumindest eines ersten Abschnitts des Fahrzeugs, Mittel zum Aufbringen einer Kraft (15) auf einen zweiten Abschnitt (5) des Fahrzeugs, welche angepasst sind, um das Fahrzeug zu deformieren, und **dadurch gekennzeichnet, dass**
es Mittel zum Nachverfolgen von Bewegungen (8, 9A, 9B) des ersten Abschnitts (19A, 19B) des Fahrzeugs während der Deformation des Fahrzeugs aufweist, wobei die Mittel zumindest eine bewegungserfassende Messeinheit (9A, 9B) aufweisen, die zumindest einen Beschleunigungsmesser aufweist.

9. Anordnung nach Anspruch 8, bei welcher das Bewegungsnachverfolgungsmittel (8, 9A, 9B, 9C) eine Anzeige aufweist, und angepasst ist, um Bewegungen während einer Deformation anzuzeigen.

10. Anordnung nach Anspruch 8 oder 9, bei welcher das Bewegungsnachverfolgungsmittel (8, 9A, 9B) Mittel zum Bestimmen des Abstands der nachverfolgten Bewegung aufweist.

11. Anordnung nach Anspruch 10, bei welcher das Bewegungsnachverfolgungsmittel (8, 9A, 9B) angepasst ist, um einen Alarm auszulösen, wenn der bestimmte Abstand größer als ein Schwellwert ist.

12. Anordnung nach irgendeinem der Ansprüche 8 bis 11, bei welcher die Bewegungserfassungsmesseinheit eine Trägheitsmesseinheit (9A, 9B) ist.

13. Anordnung nach irgendeinem der Ansprüche 8 bis 12, welche Mittel zum Nachverfolgen von Bewegungen (8, 9C) eines dritten Abschnitts (19C) des Fahrzeugs während einer Deformation des Fahrzeugs aufweist, wobei erwartet wird, dass sich der dritte Abschnitt während der Deformation bewegt, wobei die Mittel zumindest eine Bewegungserfassungsmesseinheit umfassen, die zumindest einen Beschleunigungsmesser (19C) aufweist.

14. Anordnung nach Anspruch 13, bei welcher die Bewegungserfassungsmesseinheit eine Trägheitsmesseinheit (9C) ist.

15. Anordnung nach Anspruch 13 oder 14, bei welcher der dritte Abschnitt (19C) den zweiten Abschnitt (5) umfasst.

## Revendications

1. Procédé d'alignement d'un véhicule, comprenant les étapes de :
support d'une première partie (19A, 19B) du véhicule,
déformation du véhicule par application d'une force à une seconde partie (5) du véhicule,
**caractérisé par** :
le positionnement d'au moins une unité de mesure de détection de mouvement (9A, 9B) comprenant au moins un accéléromètre sur la première partie supportée (19A, 19B) du véhicule avant l'étape de déformation, et
le suivi de tous les mouvements de la première partie supportée (19A, 19B) du véhicule durant la déformation au moyen de l'unité de mesure de détection de mouvement (9A, 9B).

2. Procédé selon la revendication 1, comprenant l'étape de :
affichage des mouvements du véhicule durant la déformation.

3. Procédé selon la revendication 1 ou 2, comprenant l'étape de :
déclenchement d'une alarme si les mouvements suivis sont plus grands qu'un seuil.

4. Procédé selon l'une des revendications 1 à 3, comprenant l'étape de :
détermination de la distance du mouvement suivi.

5. Procédé selon l'une des revendications 1 à 4, dans lequel l'unité de mesure de détection de mouvement est une unité de mesure inertielle comprenant une pluralité d'accéléromètres, tels qu'au nombre de trois, et une pluralité de gyroscopes, tels qu'au nombre de trois.

6. Procédé selon l'une des revendications 1 à 5, dans lequel l'étape de positionnement comprend le positionnement d'une seconde unité de mesure de détection de mouvement (9C), de préférence une unité de mesure inertielle (9C), sur une partie (19C) du véhicule, partie dont on s'attend à ce qu'elle bouge durant l'étape de déformation.

7. Procédé selon l'une des revendications 1 à 6, dans lequel l'étape de suivi des mouvements comprend la détermination d'une direction du mouvement.

8. Installation pour l'alignement d'un véhicule comprenant au moins un support (3, 4) pour supporter au moins une première partie du véhicule, des moyens d'application d'une force (15) sur une seconde partie (5) du véhicule adaptés pour déformer le véhicule, et **caractérisée en ce qu'**elle comprend des moyens de suivi des mouvements (8, 9A, 9B) de la première partie (19A, 19B) du véhicule durant la déformation du véhicule, lesdits moyens comprenant au moins une unité de mesure de détection de mouvement (9A, 9B) comprenant au moins un accéléromètre.

9. Installation selon la revendication 8, dans laquelle les moyens de suivi du mouvement (8, 9A, 9B, 9C) comprennent un afficheur et sont aptes à afficher des mouvements durant la déformation.

10. Installation selon la revendication 8 ou 9, dans laquelle les moyens de suivi de mouvement (8, 9A, 9B) comprennent des moyens pour déterminer la distance du mouvement suivi.

11. Installation selon la revendication 10, dans laquelle les moyens de suivi de mouvement (8, 9A, 9B) sont aptes à déclencher une alarme si la distance déterminée est plus grande qu'un seuil.

12. Installation selon l'une des revendications 8 à 11, dans laquelle l'unité de mesure de détection de mouvement est une unité de mesure inertielle (9A, 9B).

13. Installation selon l'une des revendications 8 à 12, comprenant des moyens pour suivre des mouvements (8, 9C) d'une troisième partie (19C) du véhicule durant la déformation du véhicule, troisième partie dont on attend qu'elle bouge pendant la déformation, lesdits moyens comprenant au moins une unité de mesure de détection de mouvement comprenant au moins un accéléromètre (9C).

14. Installation selon la revendication 13, dans laquelle l'unité de mesure de détection de mouvement est une unité de mesure inertielle (9C).

15. Installation selon la revendication 13 ou 14, dans laquelle ladite troisième partie (19C) inclut ladite seconde partie (5).
